Europäisches Patentamt

European Patent Office

Office européen des brevets

(11) Veröffentlichungsnummer: **0 245 723 B1**

# EUROPÄISCHE PATENTSCHRIFT

(45) Veröffentlichungstag der Patentschrift: **15.04.92**

(51) Int. Cl.⁵: **A21D 2/32**

(21) Anmeldenummer: **87106339.2**

(22) Anmeldetag: **02.05.87**

(54) **Backmittel für Brötchenteige.**

(30) Priorität: **16.05.86 DE 3616594**

(43) Veröffentlichungstag der Anmeldung:
**19.11.87 Patentblatt 87/47**

(45) Bekanntmachung des Hinweises auf die
Patenterteilung:
**15.04.92 Patentblatt 92/16**

(84) Benannte Vertragsstaaten:
**AT BE CH DE ES FR GB GR IT LI LU NL SE**

(56) Entgegenhaltungen:
**EP-A- 0 146 987**
**GB-A- 984 163**

**FOOD TECHNOLOGY, Band 22, Juli 1968, Seiten 897-900; Y. POMERANZ et al.: "Natural and modified phospholipids effects on bread quality"**

**FETTE, SEIFEN, ANSTRICHMITTEL, Band 85, Nr. 3, 1983, Seiten 117-121; L. WASSERMANN: "Lipide als Backmittel"**

**KIRK-OTHMER: "Encyclopedia of chemical technology", Band 12, Seite 353, John Wiley & Sons, Inc., US**

(73) Patentinhaber: **Jodlbauer, Heinz D. Dr.**
**Alt Moabit 92**
**W-1000 Berlin 21(DE)**

Patentinhaber: **Kampffmeyer Mühlen GmbH**
**Haulander Hauptdeich 2**
**W-2102 Hamburg 93(DE)**

Patentinhaber: **Vereinigte Kunstmühlen AG**
**Meisenstrasse 32**
**W-8300 Ergolding(DE)**

Patentinhaber: **A. Nattermann & Cie. GmbH**
**Nattermannallee 1**
**W-5000 Köln 30(DE)**

(72) Erfinder: **Jodlbauer, Heinz D., Dr.**
**Alt Moabit 92**
**W-1000 Berlin 21(DE)**

(74) Vertreter: **Dipl.-Ing. H. Hauck, Dipl.-Ing. E. Graalfs, Dipl.-Ing. W. Wehnert, Dr.-Ing. W. Döring**
**Neuer Wall 41**
**W-2000 Hamburg 36(DE)**

## Beschreibung

Die vorliegende Erfindung betrifft ein Backmittel für Brötchenteige mit den Merkmalen des Oberbegriffs des Patentanpruchs 1.

Brötchenteige werden mit Hefe getrieben und aus Mehl hergestellt, das ganz oder zum größten Teil Weizenmehl ist. Weizenmehl enthält Phospholipide, die während der Teigbereitung eine wichtige Rolle spielen, indem sie z.B. die Verkleisterung der Stärke begünstigen. Nachdem man festgestellt hatte, daß die Phospholipide des Weizens auch in Lecithin enthalten sind, hat man den Teigen Rohlecithin zugesetzt und damit eine Verbesserung der Backeigenschaften der fertigen Brötchen erzielt.

Beim Übergang von der Handverarbeitung auf die maschinelle Verarbeitung ergaben sich viele Probleme bei der Herstellung des Teiges. Erst durch Zusatz von Lipiden als Emulgatoren konnte man die Knettoleranz von Teigen erhöhen.

Untersucht man die Zusammensetzung der natürlicherseits im Weizenmehl vorkommenden Lipide, so findet man eine Reihe von Lipidkomponenten, die sich im Rohlecithin wiederfinden, wie z.B. Lysophosphatidylcholin, Phosphatidylcholin, N-Acylphosphatidylethanolamine, Phosphatidylinosid, Phosphatidsäure, Lysophosphatidsäure, Phosphatidylglycerol, Lysophosphatidylethanolamin, Lysophosphatidylglycerol, Digylceride, Monoglyceride, Triglyceride, Stearine usw. Diese Weizenlipide spielen während der Teigbearbeitung eine nicht unerhebliche Rolle, diese Rolle kann sehr deutlich durch Zusatz von Lecithin bzw. synthetischen Emulgatoren verstärkt werden. Dabei können einzelne Komponenten wie auch das Verhältnis der einzelnen Phospholipide im Lecithin stören (L. Wassermann, Fette Seifen Anstrichmittel 1983, 85, 20; Y. Pomeranz, Food Techol 1970, 24, 928).

Die Wirkungsweise von Emulgatoren aus Lipiden, wie z.B. Lecithin in Form des sogenannten Rohlecithins, welches aus tierischen und pflanzlichen Materialien wie Eiern, Ölsaaten und Ölfrüchten wie z.B. Kokosnuß-Kopra, Palmkerne, Erdnüsse, Raps, Sonnenblumenkerne, Sojabohnen, Ölpalmen und Oliven, gewonnen wird (J. Eichberg, Kirk-Othmer, Encyclopedia of Chemical Technology Vol. 14 Seite 250-269), in Teigen und Backmassen ist eingehend untersucht worden (H.D. Jodlbauer ZLR 1977 (1) 33-45; Y. Pomeranz, cereal Chem. 1970, 47, 435 ff; Y. Pomeranz, Food Technol. 1970, 24, 928 ff; I.B.M. Coppock, J. Sci. Food Agr. 1954, 5, 19 ff; DE-PS 1183 452; J. Pomeranz in B.F. Szuhaj and G.R. List 'Lecithins' AOCS 1985).

Bereits in den vierziger Jahren wurde Lecithin in Mengen von 0,1 bis 0,5 %, auf Mehl gerechnet, beim Brotbacken verwendet (L. Wassermann, Fette Seifen Anstrichmittel 1983, 85, 120 ff; DE-PS 719268; W. Schäfer, Bäckerei Techn. 1972, 73 ff).

Dabei machte sich die verbesserte Teigkonsistenz bei der Verarbeitung der Teige über Maschinen bemerkbar. Das eingesetzte handelsübliche Lecithin hat pastöse bis flüssige Konsistenz. Zur besseren Handhabung in der Bäckerei wird Lecithin auf mehlartige Bestandteile aufgezogen. Durch die schwankende Qualität und Zusammensetzung, bedingt durch die verschiedene Herkunft der eingesetzten Lecithine, ist jedoch nicht immer ein guter Backerfolg gewährleistet, so daß man verstärkt auf synthetische Emulgatoren überging.

Erst der Einsatz von synthetischen Emulgatoren, allein oder im Gemisch mit Lecithin, erlaubte Backwaren maschinell so herzustellen, daß Schwankungen in den Eigenschaften der Gebäcke kaum auftraten. Bevorzugte Emulgatoren sind Mono- und Diglyceride von Diacetylweinsäure oder Mono- und Diglyceride verestert mit Genußsäuren, wie Zitronensäure und Milchsäure sowie sonstige Emulgatoren, wie beispielsweise Polyglycerinester, teilweise oder vollständig verestert mit Fettsäuren.

Mit den synthetischen Emulgatoren werden immer gleich gute Eigenschaften erhalten. In jüngster Zeit geht jedoch das Bestreben dahin, Nahrungsmittel auf den Markt zu bringen, die frei von synthetischen Stoffen sind.

Ein Backmittel mit den Merkmalen des Oberbegriffs des Patentanspruchs 1 ist aus der Veröffentlichung von Pomeranz et al in "Food Technology, Vol. 22, 1968, S. 897 ff bekannt. Hierbei beschreibt diese Veröffentlichung unter anderem drei Backmittel, die Phosphatidycholin, Phosphatidylethanolamin und Phosphatidylinositol enthalten. Exakte quantitative Angaben zu den zuvor genannten Bestandteilen weist die Publikation von Pomeranz jedoch nicht aus, da der dort verwendete Begriff "Teile" offenläßt, ob es sich dabei um Volumenteile oder Gewichtsteile handelt. Desweiteren ist aus dem Vergleich der in der vorstehend genannten Veröffentlichung enthaltenen Tabellen 2 und 4 zu schließen, daß die qualitative und quantitative chemische Zusammensetzung der in den bekannten Backmitteln enthaltenen Phospholipidfraktionen keinen nennenswerten Einfluß auf das Backergebnis haben.

Der vorliegenden Erfindung liegt die Aufgabe zugrunde, ein Backmittel für Brötchenteige der angegebenen Art zur Verfügung zu stellen, das einen natürlichen Wirkstoff enthält und zu reproduzierbaren, verbesserten Eigenschaften hinsichtlich des Backverhaltens der Teige und Brötchen führt.

Diese Aufgabe wird erfindungsgemäß durch ein Backmittel mit den kennzeichnenden Merkmalen des Patentanspruchs 1 gelöst.

Das erfindungsgemäße Backmittel für Brötchenteige, das eine Fettkomponente und/oder Mehl, Zucker, eine Phosphatidylcholin und Phosphatidylethanolamin aufweisende Phospholipidfraktion und ggf. weitere übliche Zusatzstoffe enthält, zeichnet sich dadurch aus, daß die Phospholipidfraktion

23 - 80 Gew.-% Phosphatidylcholin,

5 - 35 Gew.-% Phosphatidylethanolamin,

3 - 15 Gew.-% N-Acylphosphatidylethanolamin und

5 - 25 Gew.-% sonstiger Phospholipide, Sterine, Steringlykoside, Zucker, Triglyceride enthält.

Die zuvor beschriebene Phospholipidfraktion in dem erfindungsgemäßen Backmittel wirkt als Emulgator. Als solcher ermöglicht die Fraktion die Bildung einer Fett/Wasser-Emulsion, so daß das Fett besser verteilt und die Wasseraufnahmefähigkeit des Teiges erhöht werden kann, was wiederum zu einer Verbesserung der Teigstruktur führt. Im Gegensatz zu herkömmlichen Emulgatoren, wie Diacetylweinsäureester, die das Wachstum der Hefe aktivieren, bis sich ein Gleichgewicht eingestellt hat, verändert die Phospholipidfraktion die Teigstruktur durch Veränderung der Viskosität. Damit ist die Möglichkeit gegeben, daß der Teig das gleiche Volumen erreicht wie mit einem synthetischen Emulgator. Die einzelnen in der Fraktion enthaltenen Phospholipide wirken auf die Bestandteile des Mehls, wie Proteine, Stärke und Schleimstoffe ein, was viele Eigenschaftsverbesserungen bringt. So wird die Krume des fertigen Teiges weicher, das Volumen größer, die Poren feiner und die Porenwände dünner. Auch wird der Gärvorgang des Teiges beeinflußt, so daß eine Gärunterbrechung möglich ist. Die fertige Backware läßt sich besser aus der Form herausnehmen und die Frischhaltezeit ist verlängert. Es ist bisher nicht geklärt, worauf diese Eigenschaftenverbesserungen zurückzuführen sind.

Eine erste Ausführungsform des erfindungsgemäßen Backmittels weist eine Phospholipidfraktion auf, die 23 bis 80 Gew.-% Phosphatidylcholin, 5 bis 35 Gew.-% Phosphatidylethanolamin und als sonstige Phospholipide Lysophosphatidylcholin, Lysophosphatidylethanolamin, Lysophosphatidylinositol, Phosphatidylinositol, Phosphatidsäure, Lysophosphatidsäure, Phosphatidylglycerol, Lysophosphatidylglycerol, Lyso-N-Acylphosphatidylethanolamin sowie ggf. Mono und/oder Diglyceride enthält.

Die zuvor beschriebenen Phospholipidfraktionen des erfindungsgemäßen Backmittels können nach an sich bekannten Verfahren gemäß der DE-OS 30 47 048, der DE-OS 30 47 012 und der DE-OS 30 47 011 aus Sojabohnen, Raps, Sonnenblumenkernen und anderen Ölsaaten und Ölfrüchten, bevorzugt jedoch aus Sojabohnen, gewonnen werden.

Bevorzugt werden die Phospholipidfraktionen gewonnen, indem man Rohlecithin (z.B. Sojarohlecithin) bei ca. 75 ° C mit Ethanol extrahiert. Die ethanollöslichen Bestandteile werden von den unlöslichen Bestandteilen abgetrennt und nach Sedimentation bei erniedrigter Temperatur gemäß EP 0054770 einer Säulenchromatographie über Kieselgel unterzogen.

Durch Variation der Extraktions- und Säulenchromatographiebebingungen kann die Zusammensetzung der Phospholipidfraktionen je nach Bedarf. eingestellt werden.

Die Phospholipidfraktion liegt allgemein in einer Menge im Bereich von 0,05 bis 25 % in dem Backmittel vor, vorzugsweise in einer Menge von 0,2 bis 7,5 %.

Besonders geeignet ist eine Phospholipidfraktion, die weniger als 5 Gew.% Triglyceride enthält

Das erfindungsgemäße Backmittel hat eine hohe Lagerstabilität. Wenn man es mit einem Fett, das frei von Lipase und Lipoxigenase ist und einem Zuckergehalt von mindestens 40 % herstellt, so ist es garantiert mindestens 1 Jahr haltbar.

Wie aus dem weiter unter gebrachten Ausführungsbeispiel zu ersehen ist, erhält man bei Brötchenteigen, die mit dem mit erfindungsgemäßen Backmittel hergestellt werden bessere Backergebnisse im Vergleich zu Brötchenteigen die, mit einem Backmittel mit synthetischem Emulgator gebacken sind. Gegenüber handelsüblichem Rohlecithin,auch entöltem Rohlecithin, bringt das erfindungsgemäße Backmittel nicht nur den Vorteil, daß immer gleichbleibende Ergebnisse erhalten werden, sondern auch erheblich bessere Teig-und Backwaren-Eigenschaften, wie dies nachfolgend noch die Vergleichsbeispiele belegen.

Das Backmittel für Brötchenteige kann nach an sich bekannten Verfahren und den Verfahren hergestellt werden, die in der europäischen Patentanmeldung 02 45 727 offenbart sind.

Die Erfindung wird nun noch anhand eines Ausführungsbeispiels näher erläutert.

Ausführungsbeispiel

Um den Unterschied der Verwendung vom Backmitteln, hergestellt mit handelsüblichen Rohlecithinen und mit einer Phospholipidfraktion nach der Erfindung zu ermitteln, wurden folgende Vergleichsversuche durchgeführt.

Es wurden drei Teige mit Backmitteln gleicher Zusammensetzung aber unterschiedlicher Emulgatorzusammensetzung hergestellt, jedoch unter Verwendung

eines Backmittels A (nicht-entöltem Rohlecithin) (Handelsprodukt)

eines Backmittels B (entöltem Rohlecithin) (Handelsprodukt) und

eines Backmittel C (Phospholipidfraktion, wie vorstehend beschrieben).

Der Brötchenteig wies folgende Bestandteile auf:

200 g Mehl, Type 550,
1220 g (ml) Wasser
100 g Hefe
40 g Salz.

In diesen Brötchenteig wurden jeweils 60 g der vorstehend beschriebenen Backmittel in einem Spiralkneter 6 Minuten lang eingeknetet. Teigruhezeit 5 + 15 Minuten, Teigausbeute 161, Teigeinlage 1600 g, Gärzeit 40 Minuten, Teigtemperatur 26°C, Ofentemperatur 240°C, Backzeit 20 Minuten.

Die Ergebnisse dieses Vergleichversuches sind nachfolgend tabellarisch zusammengefaßt.

Tabelle

| Brötchenteig hergestellt mit | Normalgare Volumen/ml | Übergare Volumen/ml | Teig-ausbeute | Teig-eigenschaften | Krumen-elastizität | Bräunung der Gebäcke |
|---|---|---|---|---|---|---|
| Backmittel A | 7.800 | 8.220 | 157 | stabil leicht feucht | stabil | normal |
| Backmittel B | 7.810 | 7.830 | 157 | stabil elastisch | stabil | normal |
| Backmittel C | 8.700 | 9.000 | 158 | trocken/stabil/ elastisch | stabil/ elastisch | normal/ kräftig |

Die Ergebnisse zeigen, daß sich ein Backmittel, welches entöltes Rohlecithin enthält, im Vergleich zu einem Backmittel mit nicht-entöltem Rohlecithin günstig auf die Teigeigenschaften auswirkt. Verwendet man aber ein Backmittel, das eine Phospholipidfraktion der vorstehend beschriebenen Art enthält, so bringt dies eine erhebliche Verbesserung auch hinsichtlich Normalgare, Übergare, den Teigeigenschaften und den Eigenschaften des fertigen Brötchens.

**Patentansprüche**

1. Backmittel für Brötchenteige, das eine Fettkomponente und/oder Mehl, Zucker, eine Phosphatidylcholin und Phosphatidylethanolamin aufweisende Phospholipid-Fraktion und gegebenenfalls weitere übliche Zusatzstoffe enthält, dadurch gekennzeichnet, daß die Phospholipidfraktion
23 - 80 Gew.% Phosphatidylcholin,
5 - 35 Gew.% Phosphatidylethanolamin,
3 - 15 Gew.% N-Acylphosphatidylethanolamin und
5 - 25 Gew.% sonstiger Phospholipide, Sterine, Steringlykoside, Zucker; Trigylceride enthält.

2. Backmittel nach Anspruch 1, dadurch gekennzeichnet, daß die Phospholipidfraktion als sonstige Phospholipide Lysophosphatidylcholin, Lysophosphatidylethanolamin, Lysophosphatidylinositol, Phosphatidylinositol, Phosphatidsäure, Lysophosphatidsäure;, Phosphatidylglycerol, Lysophosphatidylglycerol, Lyso-N-Acylphosphatidylethanolamin sowie ggf. Mono- und/oder Diglyceride enthält.

3. Backmittel nach Anspruch 1 oder 2, dadurch gekennzeichnet, daß die Phospholipidfraktion < 5 Gew.% Triglyceride enthält.

4. Backmittel nach einem der vorangehenden Ansprüche, dadurch gekennzeichnet, daß es die Phospholipidfraktion in einer Menge von 0,05 bis 25 Gew.% enthält.

5. Backmittel nach Anspruch 4, dadurch gekennzeichnet, daß es die Phospholipidfraktion in einer Menge von 0,2 bis 7,5 Gew.% enthält.

**Claims**

1. A baking agent for breakfast roll doughs comprising a fat component and/or flour, sugar, a phosphatidylcholine and phosphatidylethanolamine containing phospholipid-fraction and possibly further usual additives, characterized in that the phospholipid-fraction contains
23 - 80 % by weight phosphatidylcholine,
5 - 35 % by weight phosphatidylethanolamine,
3 - 15 % by weight N-acylphosphatidylethanolamine and
5 - 25 % by weight other phospholipids, sterines, sterine glycosides, sugar, triglycerides.

2. The baking agent according to claim 1, characterized in that the phospholipid-fraction contains as other phospholipids lysophosphatidylcholine, lysophosphatidylethanolamine, lysophosphatidylinositol, phosphatidylinositol, phosphatide acid, lysophosphatide acid, phosphatidylglycerol, lysophosphatidylglycerol, lyso-N-acylphosphatidylethanolamine as well as eventually monoglyceride and/or diglyceride.

3. The baking agent according to claim 1 or 2, characterized in that the phospholipid-fraction contains 5 % by weight triglycerides.

4. The baking agent according to one of the preceding claims, characterized in that it contains the phospholipid-fraction in an amount of 0.05 to 25 % by weight.

5. The baking agent according to claim 4, characterized in that it contains the phospholipid-fraction in an amount of 0.2 to 7.5 % by weight.

**Revendications**

1. Shortening pour pâtes à petits pains, qui contient un composant gras et/ou de la farine, du sucre, une phosphatidylcholine et une fraction phospholipidique comprtant de la phosphatidyléthanolamine et éventuellement d'autres additifs usuels, caractérisé en ce que la fraction phospholipidique contient
23 - 80% en poids de phosphatidylcholine,
5 - 35% en poids de phosphatidyléthanolamine,
3 - 15% en poids de N-acylphosphatidyléthanolamine et
5 - 25% en poids de phospholipides usuels, de stérines, de stérineglucosides, de sucre, de triglycérides.

2. Shortening suivant la revendication 1, caractérisé en ce que la fraction phospholipidique contient, à titre de phospholipides usuels, de la lysophosphatidylcholine, de la lysophosphatidyléthanolamine, du lysophosphatidylinositol, du phosphatidylinositol, de l'acide phosphatidique, de l'acide lysophosphatidique, du phosphatidylglycérol, du lysophosphatidylglycérol, de la lyso-N-acylphosphatidyléthanolamine, comme éventuellement aussi des mono- et/ou diglycérides.

3. Shortening suivant la revendication 1 ou 2, caractérisé en ce que la fraction phospholipidique contient moins de 5% en poids de triglycérides.

4. Shortening suivant l'une quelconque des revendications précédentes, caractérisé en ce qu'il contient la fraction phospholipidique en une proportion de 0,05 à 25% en poids.

5. Shortening suivant la revendication 4, caractérisé en ce qu'il contient la fraction phospholipidique en une proportion de 0,2 à 7,5% en poids.